# EUROPÄISCHE PATENTSCHRIFT

(11) **EP 1 422 431 B1**
(45) Veröffentlichungstag und Bekanntmachung des Hinweises auf die Patenterteilung: **16.08.2006**
(21) Anmeldenummer: 02026124.4
(22) Anmeldetag: 23.11.2002
(51) Int. Cl.: F16D 13/58, B25B 27/00, F16D 13/38

(54) **Druckplattenbaugruppe, insbesondere für eine Reibungskupplung**
Pressure plate assembly for automotive vehicle
Ensemble plateau de pression pour un embrayage à friction d'une voiture automobile

(43) Veröffentlichungstag der Anmeldung: 26.05.2004
(73) Patentinhaber: ZF Sachs AG, 97424 Schweinfurt (DE)
(72) Erfinder: Mensch, Waldemar, 96328 Küps (DE); Vogt, Sebastian, 97616 Bad Neustadt (DE); Orlamünder, Andreas, 97422 Schweinfurt (DE)

(56) Entgegenhaltungen:
- DE-A- 4 222 045
- US-A- 4 660 695
- US-A- 5 400 887
- US-A- 5 950 786
- US-A1- 2002 144 875

## Beschreibung

Die vorliegende Erfindung betrifft eine Druckplattenbaugruppe, insbesondere für eine Reibungskupplung, umfassend ein mit einer Widerlageranordnung zur gemeinsamen Drehung um eine Drehachse zu verbindendes Gehäuse, eine im Gehäuse angeordnete und mit diesem um die Drehachse drehbare Anpressplatte, sowie einen Kraftspeicher, welcher an einer Außenseite des Gehäuses angeordnet ist, zur Beaufschlagung der Anpressplatte im Bereich von das Gehäuse durchsetzenden Beaufschlagungsabschnitten. Eine solche Anordnung ist z.B. aus DE4222045, US4660695 und US5950786 bekannt.

Insbesondere bei Druckplattenbaugruppen bzw. Reibungskupplungen des Mehrscheibentyps, also bei Kupplungen, bei welchen, mehrere Kupplungsscheiben axial aufeinander folgend gestaffelt sind und ein über die Kupplung zu übertragendes Drehmoment dann über diese mehreren Kupplungsscheiben übertragen wird, ist es bekannt, zur effizienteren Bauraumausnutzung den Kraftspeicher, der im Allgemeinen als Membranfeder oder Tellerfeder ausgebildet ist, an der Außenseite des Gehäuses vorzusehen. In einem Zustand, in welchem eine Druckplattenbaugruppe noch nicht mit einer Widerlageranordnung, also beispielsweise einem Schwungrad o. dgl., verbunden ist, ist für die durch den Kraftspeicher auf die Anpressplatte übertragene Einrückkraft keine Reaktionskraft vorhanden. Infolgedessen wird der Kraftspeicher sich entspannen, bis er beispielsweise in seinem radial äußeren Bereich am Gehäuse zur Anlage kommt. Diese Kraftbeaufschlagung des Gehäuses hat eine Verformung desselben zur Folge, was insbesondere eine Auswirkung auf die Verbindbarkeit des Gehäuses mit der Widerlageranordnung zur Folge haben kann.

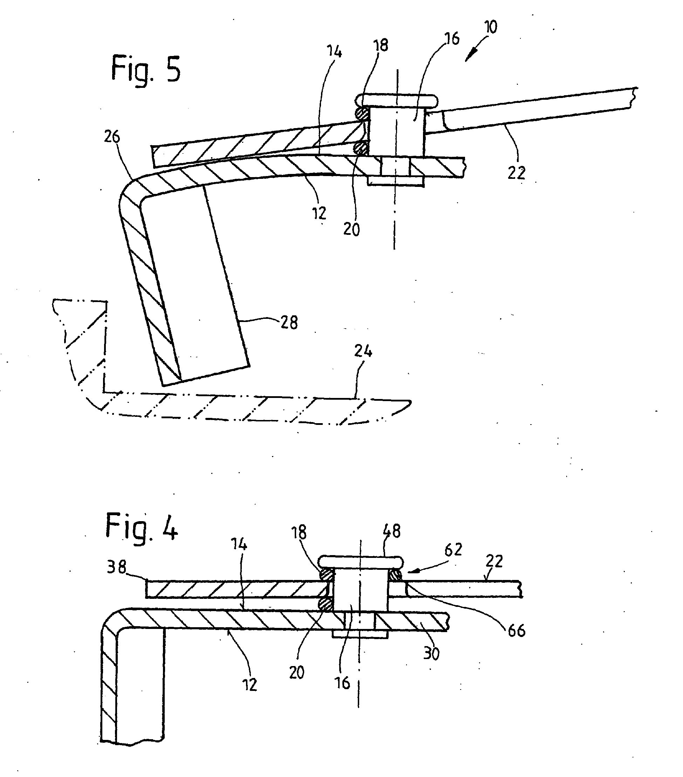

Dieser Zustand ist in Fig. 5 vereinfacht dargestellt. Man erkennt das Gehäuse 12 einer Druckplattenbaugruppe 10, das an seiner Gehäuseaußenseite 14 über mehrere so genannte Distanzbolzen 16 und zwei Drahtringe 18, 20 einen beispielsweise als Membranfeder ausgebildeten Kraftspeicher 22 trägt. In einem Zustand, in welchem das Gehäuse 12 mit einem nur schematisch dargestellten Widerlager 24 noch nicht verbunden ist, beaufschlagt der sich entspannende Kraftspeicher 22 in seinem radial äußeren Bereich den radial äußeren Bereich 26 des Gehäuses 12, mit der Folge, dass durch den erzeugten Kraftrückschluss dieser radial äußere Bereich 26 des Gehäuses 12 verformt wird. Die zur Anbindung an das Widerlager dienenden Abschnitte 28 werden dabei ebenfalls verformt bzw. geringfügig verkippt, so dass die Montage nur erschwert erfolgen kann. Wird in diesem Zustand jedoch das Gehäuse 12 mit dem Widerlager 24 verschraubt, so kann beim ersten Ausrücken der so hergestellten Kupplung sich das Gehäuse 12 entspannen, was zur Folge haben kann, dass die die Verbindung zwischen dem Gehäuse 12 und dem Widerlager 24 herstellenden Schraubbolzen nicht mehr fest angezogen sind und sich dann selbst lockern können.

Es ist die Aufgabe der vorliegenden Erfindung, für eine Druckplattenbaugruppe der eingangs genannten Bauart Maßnahmen vorzusehen, welche die einfache und zuverlässige Montierbarkeit derselben gewährleisten.

Erfindungsgemäß wird diese Aufgabe gelöst durch eine Druckplattenbaugruppe, insbesondere für eine Reibungskupplung, umfassend ein mit einer Widerlageranordnung zur gemeinsamen Drehung um eine Drehachse zu verbindendes Gehäuse, eine im Gehäuse angeordnete und mit diesem um die Drehachse drehbare Anpressplatte, einen Kraftspeicher, welcher an einer Außenseite des Gehäuses angeordnet ist, zur Beaufschlagung der Anpressplatte im Bereich von das Gehäuse durchsetzenden Beaufschlagungsabschnitten sowie eine Montagevorspannanordnung zum Halten des Kraftspeichers in einer Montagevorspannstellung.

Durch die Montagevorspannanordnung wird dafür gesorgt, dass der Kraftspeicher in einem für die Montage der gesamten Druckplattenbaugruppe an eine Widerlageranordnung geeigneten Zustand bzw. einer entsprechenden Stellung gehalten wird, in welcher eine ungünstige und zur Verformung führende Beaufschlagung des Gehäuses durch den Kraftspeicher nicht vorhanden ist.

Um in einfacher und definierter Art und Weise den Kraftspeicher entgegen seiner eigenen Vorspannung in der Montagevorspannstellung halten zu können, wird vorgeschlagen,-dass der Kraftspeicher durch eine Mehrzahl von Trägerelementen an dem Gehäuse getragen ist und dass die Montagevorspannanordnung wenigstens ein Montagevorspannelement umfasst, durch welches der Kraftspeicher in der Montagevorspannstellung bezüglich wenigstens einem Trägerelement abgestützt ist. Dabei kann beispielsweise vorgesehen sein, dass das wenigstens eine Trägerelement an seinem von dem Gehäuse entfernten Bereich eine Abstützerweiterung aufweist und dass das wenigstens eine Montagevorspannelement in der Montagevorspannstellung des Kraftspeichers zwischen dem Kraftspeicher und der Abstützerweiterung positioniert ist.

Eine bessere Verteilung der zum Halten des Kraftspeichers in der Montagevorspannstellung erforderlichen Kraft kann dadurch erlangt werden, dass das Montagevorspannelement ringartig ausgebildet ist und mit mehreren Trägerelementen zum Halten des Kraftspeichers in der Montagevorspannstellung zusammenwirkt. Vorzugsweise wirkt das Montagevorspannelement mit allen Trägerelementen zusammen.

Zum sehr einfachen Herstellen bzw. Aufheben der Montagevorspannstellung wird vorgeschlagen, dass das Montagevorspannelement als offenes Ringelement ausgebildet ist und zum Herstellen und Aufheben der Montagevorspannstellung radial verformbar ist.

Wie vorangehend bereits ausgeführt, ist die vorliegende Erfindung besonders dann wirksam, wenn die Druckplattenbaugruppe eine Mehrscheiben-Druckplattenbaugruppe ist und ferner eine Zwischenplatte aufweist, welche mit dem Gehäuse zur gemeinsamen Drehung um die Drehachse verbunden ist.

Gemäß einem weiteren Aspekt betrifft die vorliegende Erfindung ein Verfahren zum Bringen und Halten eines an einer Gehäuseaußenseite angeordneten Kraftspeichers einer Druckplattenbaugruppe einer Reibungskupplung in einer Montagevorspannstellung, umfassend das Beaufschlagen des Kraftspeichers, beispielsweise um den Kraftspeicher in einen näherungsweise einer Montagevorspannstellung entsprechenden Verformungszustand zu bringen, das Einfügen wenigstens eines Montagevorspannelements in einen Zwischenraum zwischen dem Kraftspeicher und einer Abstützerweiterung wenigstens eines den Kraftspeicher an dem Gehäuse tragenden Abstützelements und das Freigeben des Kraftspeichers, so dass dieser bei Entspannung in die Montagevorspannstellung gelangt.

Die vorliegende Erfindung wird nachfolgend mit Bezug auf die beiliegenden Zeichnungen detailliert beschrieben. Es zeigt:
- Fig. 1: eine Druckplattenbaugruppe einer Mehrscheibenkupplung;
- Fig. 2: die Druckplattenbaugruppe der Fig. 1 im Teil-Längsschnitt;

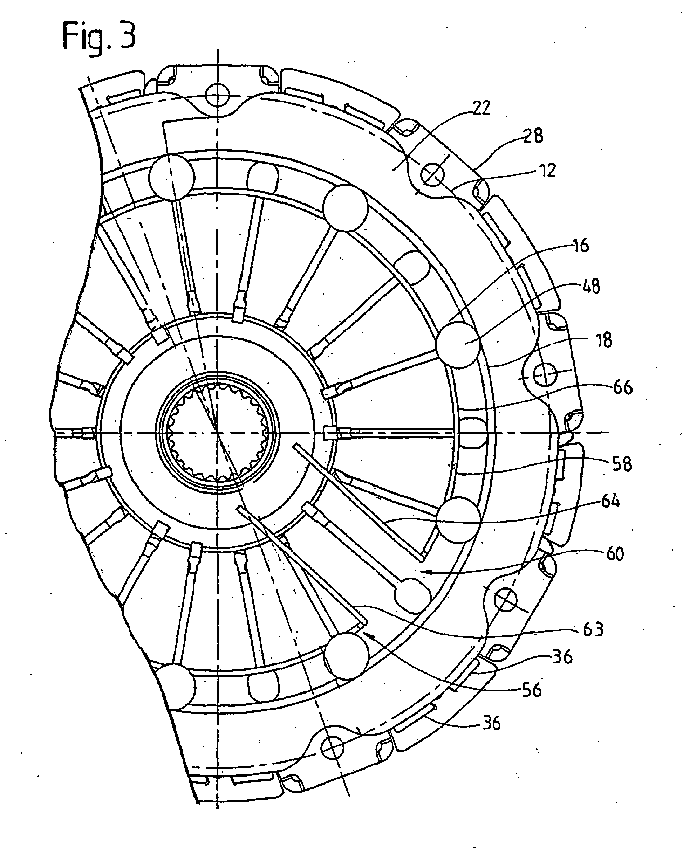

- Fig. 3: eine Teil-Axialansicht der Druckplattenbaugruppe der Fig. 1;
- Fig. 4: den Kraftspeicher der Druckplattenbaugruppe der Fig. 1 in der Montagevorspannstellung;
- Fig. 5: einen Kraftspeicher in einem Zustand, in welchem er bei nicht vorhandener Gegenkraft ein Gehäuse beaufschlagt.

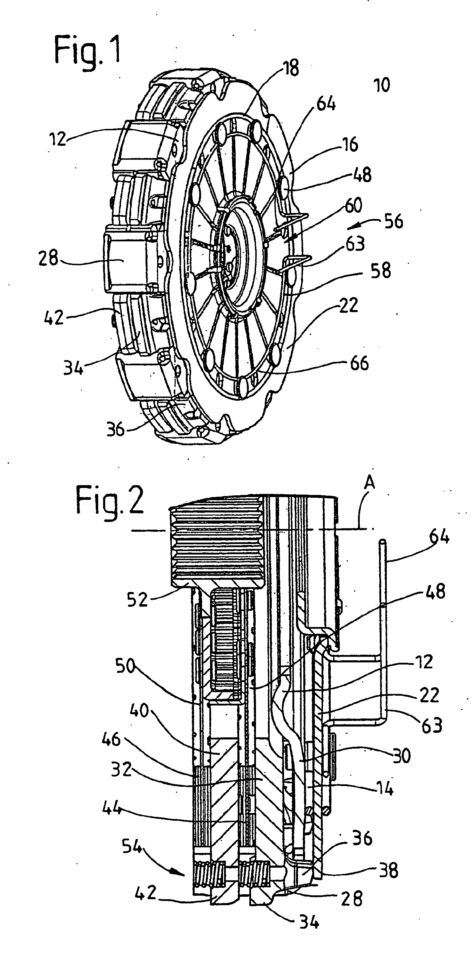

Mit Bezug auf die Fig. 1 und 2 wird zunächst eine Druckplattenbaugruppe 10 beschrieben, die als Druckplattenbaugruppe 10 für eine Mehrscheibenkupplung ausgebildet ist. Die Druckplattenbaugruppe 10 umfasst ein allgemein mit 12 bezeichnetes Gehäuse, das eine im Wesentlichen topfartige Struktur hat. Radial außen schließen an einen Bodenbereich 30 in Umfangsrichtung aufeinander folgend mehrere Abschnitte 28 an, durch welche hindurch Schraubbolzen zur Festlegung des Gehäuses 12 an einer Widerlagerplatte geführt werden können. Das gesamte Gehäuse 12 ist mit seinem Bodenbereich 30 und den Abschnitten 28 beispielsweise durch Umformen eines Blechrohlings gebildet.

Im Gehäuse 12 ist eine Anpressplatte 32 angeordnet, die an mehreren Umfangsbereichen nach radial außen greifende Drehkopplungsvorsprünge 34 aufweist, die zwischen jeweils zwei Abschnitte 28 des Gehäuses 12 eingreifen und somit eine Drehkopplung zwischen dem Gehäuse 12 und der Anpressplatte 32 herstellen. Ferner weist im Bereich dieser Vorsprünge 34 die Anpressplatte 32 mehrere den Bodenbereich 30 des Gehäuses 12 überbrückende Beaufschlagungsabschnitte 36 auf. Der an der Außenseite 14 des Bodenbereichs 30 des Gehäuses 12 angeordnete Kraftspeicher 22 beaufschlagt mit seinem radial äußeren Bereich 38 die Beaufschlagungsabschnitte 36 und presst somit die Anpressplatte 32 in Richtung vom Bodenbereich 30 weg in axialer Richtung.

In axialem Abstand zur Anpressplatte 32 ist ferner eine Zwischenplatte 40 vorgesehen, die an mehreren Umfangsbereichen ebenfalls Drehkopplungsvorsprünge 42 aufweist. Auf diese Art und Weise ist auch die Zwischenplatte 40 mit dem Gehäuse 12 zur gemeinsamen Drehung um die Drehachse A gekoppelt. Zwischen der Anpressplatte 32 und der Zwischenplatte 34 einerseits und zwischen der Zwischenplatte 40 und einem nicht dargestellten Widerlager andererseits liegen jeweils die Reibbelagsanordnungen 44, 46 zweier Kupplungsscheiben bzw. Kupplungsscheibenbereiche 48, 50, die in einem zentral gelegenen Nabenbereich 52 dann zur gemeinsamen Drehung an eine Drehachse angekoppelt sind. Es ist ferner noch eine Lüftkrafterzeugungsanordnung 54 vorgesehen, welche unter Abstützung am Widerlager und der Zwischenplatte 40 einerseits und an der Zwischenplatte 40 und der Anpressplatte 32 andererseits dafür sorgt, dass bei Durchführung von Ausrückvorgängen die Zwischenplatte 40 und die Anpressplatte 32 sich in geeignetem Ausmaß von den jeweils mit diesen reibend zusammenwirkenden Oberflächen weg bewegen.

Der Kraftspeicher 22 ist, wie man auch in der Fig. 4 erkennen kann, über eine Mehrzahl von in Umfangsrichtung aufeinander folgend am Bodenbereich 30 des Gehäuses 12 festgelegten Befestigungsbolzen 16, auch Distanzbolzen genannt, getragen. Diese Distanzbolzen 16 weisen an ihren vom Bodenbereich 30 entfernten Enden erweiterte Kopfbereiche oder Abstützbereiche 48 auf. Die beiden bereits mit Bezug auf die Fig. 5 angesprochenen Drahtringe 18, 20 umgeben die Distanzbolzen 16 an ihrer Außenseite, so dass der Kraftspeicher 22 axial zwischen dem Bodenbereich 30 bzw. der Außenseite 14 desselben und den Abstützabschnitten 48 der Distanzbolzen 16 gehalten ist und um die Auflagebereiche an diesen Drahtringen 18, 20 bei Durchführung von Ein- bzw. Ausrückvorgängen verschwenken kann.

Um das vorangehend geschilderte Problem der Beaufschlagung des Gehäuses 12 durch den Kraftspeicher 22 in seinem radial äußeren Bereich 38 in einem Zustand, in welchem noch keine Gegenkraft erzeugt werden kann, zu vermeiden, ist gemäß der vorliegenden Erfindung eine allgemein mit 56 bezeichnete Montagevorspannanordnung vorgesehen. Diese umfasst ein aus Drahtmaterial gebildetes Ringelement 58, das eine Umfangsunterbrechung 60 aufweist. Im Bereich dieser Umfangsunterbrechung weist das Ringelement 58 zwei Betätigungsabschnitte 63, 64 auf, die durch aus der Ebene des Ringkörpers 66 herausgebogene bzw. dazu sich im Wesentlichen parallel erstreckende Griffe bereitstellen. Das Ringelement 58 kann so ausgebildet sein, dass es aufgrund seiner eigenen Elastizität in eine bestimmte Radialkonfiguration vorgespannt ist, in welcher der Ringkörper 66 bezogen auf die Drehachse A bzw. eine zentrale Achse desselben eine Abmessung aufweist, die zumindest geringfügig größer ist, als eine durch die nach radial innen gelegene Seite der Distanzbolzen 16 definierte Kreislinie.

Um den Kraftspeicher 22 in die in Fig. 4 erkennbare Montagevorspannstellung bringen zu können, wird zunächst der Kraftspeicher 22 radial innen in herkömmlicher Art und Weise bezüglich des Gehäuses 12 beaufschlagt, so dass zwischen den Abstützabschnitten 48 der Distanzbolzen 16 und dem Kraftspeicher 22 der in der Fig. 4 auch erkennbare Zwischenraum 62 erzeugt wird. Daraufhin wird das Ringelement 58 im Bereich seiner beiden Abschnitte 63, 64 zusammengezogen, so dass zumindest lokal der Radius des Ringelements 58 abnimmt. Das so gehaltene Ringelement 58 wird dann in die bei den Distanzbolzen 16 generierten Zwischenräume 62 eingeführt, wobei zum leichteren Ermöglichen dieses Einführens der Kraftspeicher 22 so weit verformt wird, dass diese Zwischenräume 62 zunächst ein geringes Übermaß bezüglich des Durchmessers des Ringkörpers 66 aufweisen. Ist das Ringelement 58 in der in Fig. 1 auch erkennbaren Positionierung angeordnet worden, so werden die Abschnitte 63, 64 losgelassen, und durch radiale Aufweitung des Ringelements 58 gelangt der Ringkörper 66 nunmehr in alle Zwischenräume 62. Wird daraufhin der Kraftspeicher 22 wieder losgelassen, so bewegt er sich mit seinen radial innerhalb der Distanzbolzen 16 gelegenen Bereichen wieder geringfügig in Richtung vom Boden 30 des Gehäuses 12 weg, bis er an dem Ringkörper 66 des Ringelements 58 zur Anlage kommt. In diesem Zustand ist dann der Kraftspeicher 22 gegen weitere Entspannung blockiert durch das an den Abstützabschnitten 48 sich abstützende Ringelement 58 einerseits und den an der Außenseite 14 des Bodenbereichs 30 sich abstützenden Drahtring 20 andererseits. Der Kraftrückschluss erfolgt über die Distanzbolzen 16 selbst, so dass in das Gehäuse 12 keine wesentlichen zu dessen Verformung beitragenden Kräfte eingeleitet werden.

In dem in der Fig. 4 erkennbaren Montagevorspannzustand ist dann zwischen dem radial äußeren Bereich 38 des Kraftspeichers 22 und dem Gehäuse 12 ein axialer Zwischenraum vorhanden, und das Gehäuse 12 kann in korrekter Art und Weise beim Anbringen der Druckplattenbaugruppe 10 an einem Widerlager an dieses Widerlager herangeführt und mit diesem verschraubt werden. Ist diese Verschraubung erfolgt, kann das Ringelement 58 wieder entfernt werden, indem zunächst der Kraftspeicher 22 radial innen wieder beaufschlagt wird, um die Klemmung des Ringkörpers 66 aufzuheben. Daraufhin kann an den Abschnitten 63, 64 das Ringelement 58 wieder zusammengezogen werden, so dass es zunächst aus einigen der Zwischenräume 62 austritt und dann durch Verkippen und Herausziehen aus den anderen Zwischenräumen 62 entfernt werden kann.

Es sei darauf hingewiesen, dass selbstverständlich die vorangehend beschriebene Klemmwirkung zwischen dem Kraftspeicher und den Distanzbolzen auch durch andere Zwischenlageelemente erfolgen kann, insbesondere ist es nicht zwingend erforderlich, ein einziges derartiges Element einzusetzten. Letztendlich könnte bei einem oder einigen der Distanzbolzen 16 jeweils ein separates Montagevorspannelement zum Einsatz gebracht werden.

Die Montagevorspannanordnung 56, wie sie vorangehend beschrieben worden ist, kann nicht nur in besonders vorteilhafter Weise zur Erstmontage einer Druckplattenbaugruppe eingesetzt werden, sondern kann selbstverständlich auch im Reparaturfall eingesetzt werden. In jedem Falle ergibt sich der Vorteil, dass die Druckplattenbaugruppe 10 nicht unter Beeinflussung der durch den Kraftspeicher erzeugten Anpresskraft an einem Widerlager angeschraubt werden muss.

Die in den Figuren dargestellte Druckplattenbaugruppe ist selbstverständlich nur ein Beispiel für eine Druckplattenbaugruppe, bei welcher die Erfindungsprinzipien Anwendung finden können. Die Druckplattenbaugruppe kann in verschiedensten Bereichen abgewandelt werden, beispielsweise im Bereich des Kraftspeichers oder der Anpressplatte und der Zwischenplatte. So ist es selbstverständlich möglich, dass die das Gehäuse überbrückenden Abschnitte 36 auch Bestandteil des Kraftspeichers sein können, der in seinem radial äußeren Bereich mit entsprechenden Verformungen oder daran angebrachten Bauteilen ausgebildet sein kann. Auch kann das Gehäuse in anderer Form ausgebildet sein und beispielsweise im Außenumfangsbereich einen flanschartigen Abschnitt aufweisen, mit welchem dieses an einer Widerlagerplatte o. dgl. festgeschraubt wird. Weiterhin kann selbstverständlich die Drehkopplung der Anpressplatte und ggf. einer Zwischenplatte mit dem Gehäuse in anderer Art und Weise, beispielsweise über Tangentialblattfedern o. dgl. erfolgen.

## Patentansprüche

1. Druckplattenbaugruppe, insbesondere für eine Reibungskupplung, umfassend:
- ein mit einer Widerlageranordnung (24) zur gemeinsamen Drehung um eine Drehachse (A) zu verbindendes Gehäuse (12),
- eine im Gehäuse (12) angeordnete und mit diesem um die Drehachse (A) drehbare Anpressplatte (32),
- einen Kraftspeicher (22), welcher an einer Außenseite (14) des Gehäuses (12) angeordnet ist, zur Beaufschlagung der Anpressplatte (32) im Bereich von das Gehäuse (12) überbrückenden Beaufschlagungsabschnitten (36),
**dadurch gekennzeichnet, dass**
der Kraftspeicher (22) durch eine Mehrzahl von Trägerelementen (16) an dem Gehäuse (12) getragen und eine Montagevorspannanordnung (56) zum Halten des Kraftspeichers (22) in einer Montagevorspannstellung vorgesehen ist und dass die Montagevorspannanordnung (56) wenigstens ein Montagevorspannelement (58) umfasst, durch welches der Kraftspeicher (22) in der Montagevorspannstellung bezüglich wenigstens einem Trägerelement (16) abgestützt ist.

2. Druckplattenbaugruppe nach Anspruch 1,
**dadurch gekennzeichnet, dass** das wenigstens eine Trägerelement (16) an seinem von dem Gehäuse (12) entfernten Bereich eine Abstützerweiterung (48) aufweist und dass das wenigstens eine Montagevorspannelement (58) in der Montagevorspannstellung des Kraftspeichers (22) zwischen dem Kraftspeicher (22) und der Abstützerweiterung (48) positioniert ist.

3. Druckplattenbaugruppe nach Anspruch 1 oder 2,
**dadurch gekennzeichnet, dass** das Montagevorspannelement (58) ringartig ausgebildet ist und mit mehreren Trägerelementen (16) zum Halten des Kraftspeichers (22) in der Montagevorspannstellung zusammenwirkt.

4. Druckplattenbaugruppe nach Anspruch 3,
**dadurch gekennzeichnet, dass** das Montagevorspannelement (58) mit allen Trägerelementen (16) zusammenwirkt.

5. Druckplattenbaugruppe nach Anspruch 3 oder 4,
**dadurch gekennzeichnet, dass** das Montagevorspannelement (58) als offenes Ringelement ausgebildet ist und zum Herstellen und Aufheben der Montagevorspannstellung radial verformbar ist.

6. Druckplattenbaugruppe nach einem der Ansprüche 1 bis 5,
**dadurch gekennzeichnet, dass** die Druckplattenbaugruppe (10) eine Mehrscheiben-Druckplattenbaugruppe ist und ferner eine Zwischenplatte (40) aufweist, welche mit dem Gehäuse (12) zur gemeinsamen Drehung um die Drehachse (A) verbunden ist.

7. Verfahren zum Bringen und Halten eines an einer Gehäuseaußenseite angeordneten Kraftspeichers (22) einer Druckplattenbaugruppe (10) einer Reibungskupplung in einer Montagevorspannstellung, umfassend das Beaufschlagen des Kraftspeichers (22), das Einfügen wenigstens eines Montagevorspannelements (58) in einen Zwischenraum (62) zwischen dem Kraftspeicher (22) und einer Abstützerweiterung (48) wenigstens eines den Kraftspeicher (22) an dem Gehäuse (12) tragenden Abstützelements (16) und das Freigeben des Kraftspeichers (22), so dass dieser bei Entspannung in die Montagevorspannstellung gelangt.

## Claims

1. Pressure plate assembly, in particular for a friction clutch, comprising:
- a housing (12) which is to be connected to an abutment arrangement (24) for common rotation about a rotational axis (A),
- a pressure plate (32) which is arranged in the housing (12) and can be rotated with the latter about the rotational axis (A),
- a force accumulator (22) which is arranged on an outer side (14) of the housing (12), for acting on the pressure plate (32) in the region of action sections (36) which bridge the housing (12),
**characterized in that** the force accumulator (22) is carried by a multiplicity of carrier elements (16) on the housing (12), and an assembly pretensioning arrangement (56) for holding the force accumulator (22) in an assembly pretensioned position is provided, and **in that** the assembly pretensioning arrangement (56) comprises at least one assembly pretensioning element (58), by which the force accumulator (22) is supported in the assembly pretensioned position with regard to at least one carrier element (16).

2. Pressure plate assembly according to Claim 1, **characterized in that** the at least one carrier element (16) has a supporting widened portion (48) on its region which is remote from the housing (12), and **in that** the at least one assembly pretensioning element (58) is positioned in the assembly pretensioned position of the force accumulator (22) between the force accumulator (22) and the supporting widened portion (48).

3. Pressure plate assembly according to Claim 1 or 2, **characterized in that** the assembly pretensioning element (58) is of annular configuration and interacts with a plurality of carrier elements (16) for holding the force accumulator (22) in the assembly pretensioned position.

4. Pressure plate assembly according to Claim 3, **characterized in that** the assembly pretensioning element (58) interacts with all the carrier elements (16).

5. Pressure plate assembly according to Claim 3 or 4, **characterized in that** the assembly pretensioning element (58) is configured as an open annular element and can be deformed radially for producing and cancelling the assembly pretensioned position.

6. Pressure plate assembly according to one of Claims 1 to 5, **characterized in that** the pressure plate assembly (10) is a multiple-disc pressure plate assembly and, furthermore, has an intermediate plate (40) which is connected to the housing (12) for common rotation about the rotational axis (A).

7. Method for moving and holding a force accumulator (22), arranged on a housing outer side, of a pressure plate assembly (10) of a friction clutch into/in an assembly pretensioned position, comprising the steps of acting on the force accumulator (22), introducing at least one assembly pretensioning element (58) into an intermediate space (62) between the force accumulator (22) and a supporting widened portion (48) of at least one supporting element (16) which carries the force accumulator (22) on the housing (12), and releasing the force accumulator (22), with the result that the latter moves into the assembly pretensioned position when the tensioning is released.

## Revendications

1. Ensemble de plateau de pression, en particulier pour un embrayage à friction, comprenant :
- un carter (12) à assembler à un ensemble de contre-appui (24) en rotation conjointe autour d'un axe de rotation (A),
- un plateau de pression (32) disposé dans le carter (12) et pouvant tourner avec ce dernier autour de l'axe de rotation (A),
- un accumulateur de force (22), qui est disposé sur un côté extérieur (14) du carter (12), pour solliciter le plateau de pression (32) dans la région de parties de sollicitation (36) surmontant le carter (12),
**caractérisé en ce que** l'accumulateur de force (22) est porté par une pluralité d'éléments porteurs (16) sur le carter (12) et un ensemble (56) de précontrainte de montage est prévu pour maintenir l'accumulateur de force (22) dans une position précontrainte de montage, et **en ce que** l'ensemble (56) de précontrainte de montage comprend au moins un élément (58) de précontrainte de montage par lequel l'accumulateur de force (22) est soutenu dans la position précontrainte de montage par rapport à au moins un élément porteur (16).

2. Ensemble de plateau de pression selon la revendication 1, **caractérisé en ce que** l'élément porteur (16) au moins unique présente un élargissement de soutien (48) sur sa région éloignée du carter (12), et **en ce que** l'élément (58) de précontrainte de montage au moins unique est positionné entre l'accumulateur de force (22) et l'élargissement de soutien (48) dans la position précontrainte de montage de l'accumulateur de force (22).

3. Ensemble de plateau de pression selon la revendication 1 ou 2, **caractérisé en ce que** l'élément (58) de précontrainte de montage est réalisé sous forme annulaire et coopère avec plusieurs éléments porteurs (16) pour maintenir l'accumulateur de force (22) dans la position précontrainte de montage.

4. Ensemble de plateau de pression selon la revendication 3, **caractérisé en ce que** l'élément (58) de précontrainte de montage coopère avec tous les éléments porteurs (16).

5. Ensemble de plateau de pression selon la revendication 3 ou 4, **caractérisé en ce que** l'élément (58) de précontrainte de montage est réalisé sous la forme d'un élément annulaire ouvert et est déformable radialement pour produire et supprimer la position précontrainte de montage.

6. Ensemble de plateau de pression selon l'une quelconque des revendications 1 à 5, **caractérisé en ce que** l'ensemble (10) de plateau de pression est un ensemble de plateau de pression à disques multiples et présente en outre un plateau intermédiaire (40) qui est assemblé au carter (12) en rotation conjointe autour de l'axe de rotation (A).

7. Procédé pour amener dans une position précontrainte de montage, et l'y maintenir, un accumulateur de force (22) - disposé sur un côté extérieur de carter - d'un ensemble (10) de plateau de pression d'un embrayage à friction, comprenant la sollicitation de l'accumulateur de force (22), l'insertion d'au moins un élément (58) de précontrainte de montage dans un espace intermédiaire (62) entre l'accumulateur de force (22) et un élargissement de soutien (48) d'au moins un élément de soutien (16) portant l'accumulateur de force (22) sur le carter (12), et la libération de l'accumulateur de force (22), de sorte que ce dernier parvient dans la position précontrainte de montage lorsqu'il est relâché.
